# EUROPEAN PATENT SPECIFICATION

(11) **EP 4 131 565 B1**
(45) Date of publication and mention of the grant of the patent: **08.07.2026**
(21) Application number: 21779389.2
(22) Date of filing: 24.03.2021
(51) Int. Cl.: H01M 10/44, H01M 10/48, H02J 7/00, B60L 58/10, B60L 53/80

(54) **BATTERY PACK FOR ELECTRIC BICYCLE AND ELECTRIC BICYCLE EQUIPPED WITH BATTERY PACK**
BATTERIEPACK FÜR EIN ELEKTROFAHRRAD UND ELEKTROFAHRRAD MIT BATTERIEPACK
BLOC-BATTERIE POUR BICYCLETTE ÉLECTRIQUE, ET BICYCLETTE ÉLECTRIQUE ÉQUIPÉE D'UN BLOC-BATTERIE

(30) Priority: 30.03.2020 JP 2020061486
(43) Date of publication of application: 08.02.2023
(73) Proprietor: Panasonic Energy Co., Ltd., Moriguchi-shi, Osaka 570-8511 (JP)
(72) Inventor: MIZOSHITA, Shingo, Osaka-shi, Osaka 540-6207 (JP); ARAI, Hidetaka, Osaka-shi, Osaka 540-6207 (JP); NISHIKAWA, Toru, Osaka-shi, Osaka 540-6207 (JP); MAEGAWA, Kazuya, Osaka-shi, Osaka 540-6207 (JP); TERAOKA, Hiroki, Osaka-shi, Osaka 540-6207 (JP)
(74) Representative: Novagraaf International SA
(86) International application number: PCT/JP2021/012180
(87) International publication number: WO 2021/200441

(56) References cited:
- EP-A1- 1 612 084
- EP-A1- 3 460 989
- JP-A- 2017 046 400
- JP-A- H0 950 826

## Description

### TECHNICAL FIELD

The present invention relates to a battery pack configured to supply electric power to a driving motor of an electric bicycle, and an electric bicycle equipped with the battery pack.

### BACKGROUND ART

Electric bicycles, which are equipped with a driving motor for driving a wheel, supply electric power from a battery to the driving motor so that a rider can drive it easily. As the electric bicycle of this type, an electric bicycle has been developed including a circuit for charging a battery pack by regenerative braking during braking (PTL 1).

The electric bicycle described in PTL 1 allows the battery to be charged while ensuring reserve charging capacity in order to decelerate the bicycle by regenerative braking without causing uncomfortable feeling to the rider. The battery that has been charged while leaving the reserve charging capacity can still be charged by regenerative braking until it is fully charged, thereby allowing the bicycle to smoothly travel a long downhill slope, for example, while performing regenerative braking.

### CITATION LIST

### Patent Literature

PTL 1: Japanese Patent Laid-Open Publication No. 2017-103871

Further art is disclosed by the documents EP 3 460 989 and EP 1 612 084. EP 3 460 989 discloses a motor driving control device having (A) an inverter unit configured to drive a motor; (B) a separation switch configured to separate a power source from the inverter unit; and (C) a controller configured to instruct the separation switch to separate the power source from the inverter unit and control the inverter unit to perform switching according to a speed and a braking target torque, upon detecting an event that braking should be performed without passing a regenerative current to the power source from the inverter unit.

### SUMMARY

### Technical Problem

The method of charging the battery while ensuring extra charging capacity has the disadvantage that the travel range offered by the battery is reduced because the battery is not fully charged. Moreover, because the bicycle is used under various travelling conditions, the charging current to the battery from the driving motor may significantly fluctuate, causing the battery to be charged momentarily with a large current. When the battery is charged with a large current, the voltage increases abruptly, causing various kinds of adverse effects on the battery.

The present invention has been developed in order to solve the foregoing and other problems. An object of the present invention is to provide an electric bicycle battery pack that can limit a voltage increase due to the charging current from the driving motor to prevent the battery deterioration resulting from the voltage increase and can further ensure sufficient safety, and to provide an electric bicycle that is equipped with the battery pack.

### Solution to Problem

A battery pack according to a first aspect of the invention includes a rechargeable battery, a charge FET including a parallel diode connected in series with the battery, and a control circuit configured to turning on and off of controlling the charge FET. The control circuit includes a discriminating circuit configured to detect a bicycle-mounted state and a charger-connected state and a memory configured to store a full charge voltage of the battery and a threshold voltage lower than the full charge voltage. The control circuit is configured, while the discriminating circuit detects the bicycle-mounted state, to: turn off the charge FET while a voltage of the battery is higher than the threshold voltage; and turn on the charge FET while the voltage of the battery is lower than the threshold voltage. The control circuit is configured, while the discriminating circuit detects the charger-connected state, to stop charging the battery by switching the charge FET to turn off the charge FET upon detecting that the voltage of the battery charged by a charger becomes higher than the full charge voltage.

A battery pack according to a second aspect of the invention includes a rechargeable battery, a charge FET including a parallel diode connected in series with the battery, and a control circuit configured to control turning on and off of the charge FET. The control circuit includes a discriminating circuit configured to detect a bicycle-mounted state and a charger-connected state and a memory configured to store a full charge voltage of the battery and a threshold current of a load current. The control circuit is configured, while the discriminating circuit detects the bicycle-mounted state, to: turn off the charge FET when the load current is smaller than the threshold current; and turn on the charge FET when the load current is larger than the threshold current. The control circuit is configured, while the discriminating circuit detects the charger-connected state, to stop charging the battery by switching the charge FET to turn off the charge FET upon detecting that the voltage of the battery charged by a charger is higher than the full charge voltage.

An electric bicycle according to an aspect of the present invention includes one of the battery packs and a driving motor connected to the battery pack via a control converter. The driving motor configured to supply a charging current to the battery pack during regenerative braking of the bicycle.

An electric bicycle according to another aspect of the present invention includes one of the battery packs, a driving motor connected to the battery pack via a control converter, and a regenerative braking power generating mechanism configured to charge the battery pack with an electromotive force of the driving motor.

### Advantageous Effects of Invention

The electric bicycle battery packs according to the present invention can limit a voltage increase due to the charging current from the driving motor to prevent the battery deterioration resulting from the voltage increase, and can further ensure sufficient safety.

### BRIEF DESCRIPTION OF THE DRAWINGS

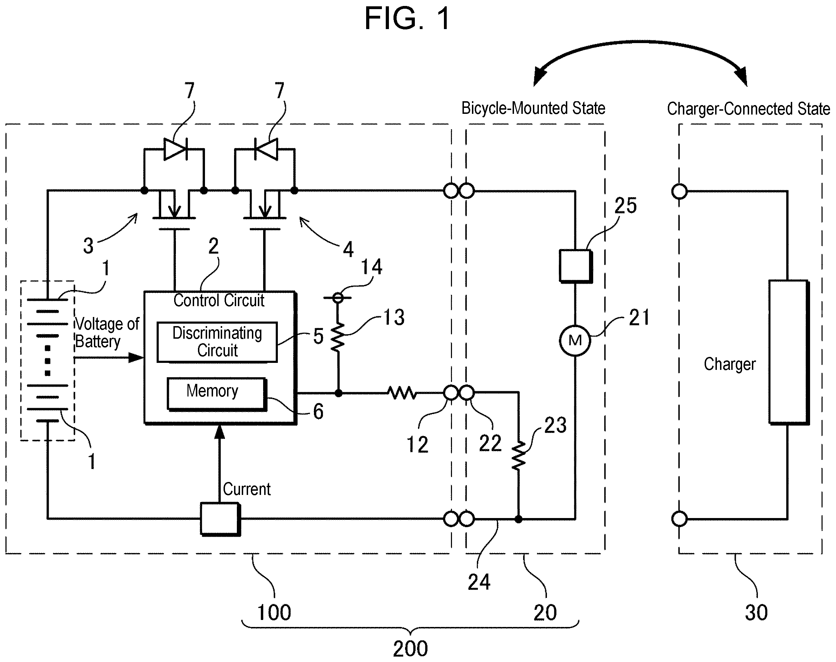

FIG. 1 is a block diagram of an electric bicycle battery pack according to an exemplary embodiment of the present invention.

### DESCRIPTION OF EMBODIMENTS

Embodiments of the present invention may be embodied by the following configurations.

A battery pack for a n electric bicycle according to a first exemplary aspect not forming part of the present invention includes a rechargeable battery, a charge FET including a parallel diode connected in series with the battery, and a control circuit configured to control turning on and off of the charge FET. The control circuit includes a discriminating circuit configured to detect a bicycle-mounted state and a charger-connected state and a memory configured to store a full charge voltage of the battery. The control circuit is configured to, while the discriminating circuit detects the bicycle-mounted state. turn off the charge FET. The control circuit is configured to, while the discriminating circuit detects the charger-connected state, stop charging the battery by switching the charge FET to turn off the charge FET upon detecting that a voltage of the battery charged by a charger becomes higher than the full charge voltage.

The above electric bicycle battery pack turns off the charge FET in the bicycle-mounted state of being mounted on the bicycle. The charge FET connected to a parallel diode, such as a parasitic diode, causes electric power to be supplied from the battery to the driving motor even when the charge FET is turned off. While the battery pack is mounted on the bicycle, the battery pack prohibits the battery from being charged by the electromotive force of the driving motor while allowing the battery to supply electric power to the driving motor. When the battery pack is mounted on the bicycle and charged by the electromotive force of the driving motor so that the battery voltage exceeds the full charge voltage, deterioration of the battery is accelerated and safety is lowered. The battery pack switches the charge FET to turn off the charge FET while the battery pack is mounted on the bicycle prohibits the battery from being charged by the electromotive force of the driving motor while the battery pack is mounted on the bicycle. Therefore, the battery pack prevents deterioration of a battery resulting from the electromotive force of the driving motor when mounted on the bicycle, thus ensuring sufficient safety.

A battery pack for an electric bicycle according to a second exemplary aspect of the present invention includes a rechargeable battery, a charge FET including a parallel diode connected in series with the battery, and a control circuit configured to turning on and off of controlling the charge FET. The control circuit includes a discriminating circuit configured to detect a bicycle-mounted state and a charger-connected state and a memory configured to store a full charge voltage of the battery and a threshold voltage lower than the full charge voltage. The control circuit is configured, while the discriminating circuit detects the bicycle-mounted state, to: turn off the charge FET while a voltage of the battery is higher than the threshold voltage; and turn on the charge FET while the voltage of the battery is lower than the threshold voltage. The control circuit is configured, while the discriminating circuit detects the charger-connected state, to stop charging the battery by switching the charge FET to turn off the charge FET upon detecting that the voltage of the battery charged by a charger becomes higher than the full charge voltage.

The above battery pack turns off the charge FET in the bicycle-mounted state in which the battery pack is mounted on the bicycle so as to prohibit the battery from being charged by the electromotive force of the driving motor when the battery voltage is higher than the threshold voltage which is predetermined to be a voltage lower than the full charge voltage. Therefore, although the battery is charged by the electromotive force of the driving motor in the state where the battery voltage is low, the battery voltage does not exceed the full charge voltage in that state, so that battery deterioration can be prevented and sufficient safety can be ensured. When the battery voltage is lower than the threshold voltage, the charge FET is turned on to permit charging by the electromotive force of the driving motor. However, the threshold voltage may be set to a voltage at which the battery is charged by the electromotive force but does not exceed the full charge voltage. Therefore, even when the battery is charged by the electromotive force of the driving motor while the battery voltage is lower than the threshold voltage, the battery voltage does not exceed the full charge voltage, so that battery deterioration is prevented and safety is ensured.

A battery pack for an electric bicycle according to a third exemplary aspect of the present invention includes a rechargeable battery, a charge FET including a parallel diode connected in series with the battery, and a control circuit configured to control turning on and off of the charge FET. The control circuit includes a discriminating circuit configured to detect a bicycle-mounted state and a charger-connected state and a memory configured to store a full charge voltage of the battery and a threshold current of a load current. The control circuit is configured, while the discriminating circuit detects the bicycle-mounted state, to: turn off the charge FET when the load current is smaller than the threshold current; and turn on the charge FET when the load current is larger than the threshold current. The control circuit is configured, while the discriminating circuit detects the charger-connected state, to stop charging the battery by switching the charge FET to turn off the charge FET upon detecting that the voltage of the battery charged by a charger is higher than the full charge voltage.

In the bicycle-mounted state of being mounted on the bicycle, the above battery pack turns off the charge FET state when the load current is smaller than the threshold current, but turns on the charge FET when the load current is larger than the threshold current. The charge FET connected to a parallel diode allows electric power to be supplied from the battery to the driving motor via the parallel diode when the charge FET is turned off. While the charge FET is turned off and electric power is supplied via the parallel diode, a voltage drop occurs due to the parallel diode. The voltage drop due to the parallel diode is larger than the voltage drop due to the FET which is turned on. An ordinary diode provides the voltage drop of about 0.6 V. In contrast, the internal resistance of the FET which is turned on is significantly small, about several milliohms, so the FET produces a smaller voltage drop than the parallel diode when electric current passes through. The parallel diode, which causes a larger voltage drop, produces electric power loss increasing proportionally to a current. Therefore, a large current supplied from the battery to the driving motor increases electric power loss in the charge FET which is turned off. The above battery pack turns on the charge FET when the load current is larger than the threshold current, so the battery pack may reduce electric power loss due to the charge FET when the large current is supplied from the battery to the driving motor.

In a bicycle battery pack according to a fourth exemplary aspect of the present invention, the control circuit includes an A/D converter configured to convert the voltage of the battery into a digital signal. The control circuit is configured to calculate the voltage of the battery by processing the digital signal converted by the A/D converter.

In a battery pack according to a fifth exemplary aspect of the present invention, the charge FET is a MOSFET including a parasitic diode as the parallel diode.

In an electric bicycle battery pack according to a sixth exemplary aspect of the present invention, the rechargeable battery is a lithium-ion battery.

An electric bicycle according to a seventh exemplary aspect of the present invention includes one of the above battery packs and a driving motor connected to the battery pack via a control converter, the driving motor configured to supply a charging current to the battery pack during regenerative braking of the bicycle.

The present invention will be detailed below with reference to the drawings. Although the following description uses directional terms and positional terms (for example, "upward," "downward," and other terms including these words) to indicate specific directions and positions as needed, such terms are merely used to facilitate understanding of the invention with reference to the drawings and are intended to limit the technical scope of the present invention. In addition, the same reference signs used throughout the drawings indicate the same or like parts and components.

The following exemplary embodiments are merely examples of the technical idea of the present invention, and therefore do not limit the present invention to the following exemplary embodiments. Moreover, the dimensions, materials, shapes, relative arrangements, and the like of parts and elements described in the following are intended for illustrative purposes only, and should not be construed to limit the scope of the invention, unless specifically stated otherwise. The contents described in one exemplary embodiment or one example may be also applicable to other exemplary embodiments and examples. Furthermore, the sizes of some elements, their positional relationships, and so forth shown in the drawings may be exaggerated for clarity in illustration.

### Exemplary Embodiment 1

Electric bicycle battery pack 100 shown in the block diagram of FIG. 1 includes rechargeable battery 1, charge FET 3 including parallel diode 7 connected in series with battery 1, and control circuit 2 configured to control turning on and off of charge FET 3. The block diagram of the drawing also shows bicycle 20 to which battery pack 100 is connected, and charger 30 that charges battery pack 100. While being mounted on bicycle 20, battery pack 100 is configured to supply electric power to driving motor 21 that drives bicycle 20. While being connected to charger 30, battery pack 100 is removed from bicycle 20 and connected to charger 30. While being mounted on bicycle 20, battery pack 100 supplies electric power to driving motor 21 to impart a driving force to bicycle 20.

In addition to charge FET 3, battery pack 100 shown in FIG. 1 includes discharge FET 4 configured to control discharging of battery 1. Charge FET 3 and discharge FET 4 are controlled to be turned on and off by control circuit 2. Control circuit 2 includes discriminating circuit 5 and memory 6. Discriminating circuit 5 is configured to detect a bicycle-mounted state in which battery pack 100 is mounted on bicycle 20 and a charger-connected state in which battery pack 100 is connected to charger 30. Memory 6 is implemented by, for example, a semiconductor memory. Memory 6 is configured to store a full charge voltage for stopping charging upon detecting that battery 1 having a voltage increase is fully charged.

Each of charge FET 3 and discharge FET 4 is a MOSFET connected to a parasitic diode as parallel diode 7. Each of charge FET 3 and discharge FET 4 may be implemented by an FET without a parasitic diode and a high-current diode that is a separate component connected in parallel to the FET, or a large-current diode may be connected in parallel to the parasitic diode. A diode exhibiting excellent large-current characteristics is used so that a large current can be supplied from battery 1 to driving motor 21. A diode that causes a low voltage drop is particularly suitable. However, in the case of a battery pack that turns on charge FET 3 to supply a large current from the FET to driving motor 21 while a large current is supplied from battery 1 to driving motor 21, the large current is supplied from the FET to the driving motor and therefore parallel diode 7 does not necessarily require large-current characteristics. Battery pack 100 shown in FIG. 1 includes an N-channel MOS for each of charge FET 3 and discharge FET 4. A P-channel FET may be used for each of the charge FET and the discharge FET.

Discriminating circuit 5 shown in the block diagram of FIG. 1 is connected to bicycle 20 via connecting terminal 12. Bicycle-side connecting terminal 22 is connected to ground line 24 via resistor 23. In battery pack 100, connecting terminal 12 is connected to power supply 14 via pull-up resistor 13. Discriminating circuit 5 is configured to detect the voltage of connecting terminal 12 so as to discriminate the bicycle-mounted state and the charger-connected state. Regarding discriminating circuit 5, while battery pack 100 is connected to bicycle 20, the voltage of connecting terminal 12 becomes lower than the power supply voltage that is divided by pull-up resistor 13 and bicycle-side resistor 23. While battery pack 100 is connected to charger 30, the voltage of connecting terminal 12 is the power supply voltage because connecting terminal 12 is not connected to ground line 24 Accordingly, discriminating circuit 5 determines that a state in which the voltage of connecting terminal 12 is lower than the power supply voltage is the bicycle-mounted state, and discriminating circuit 5 determines that a state in which the voltage of connecting terminal 12 is lower than the power supply voltage is the charger-connected state.

While battery pack 100 is mounted on bicycle 20, driving motor 21 may serve as a generator to charge battery pack 100 due to, for example, regenerative braking. When battery pack 100 is charged, the voltage increase. When battery pack 100 is charged by the electromotive force of driving motor 21, the voltage of battery pack 100 increases. The increased voltage of battery pack 100 higher than a predetermined value deteriorates electrical characteristics, and further it may cause safety hazard. For example, lithium-ion batteries are often used suitably for battery pack 100 because they have light weight, small sizes, and capable of high charge/discharge capacity. When lithium-ion batteries are charged, the maximum voltage is set to a voltage ranging from 4.1 V to 4.2 V. However, when lithium-ion batteries are charged to a voltage exceeding the maximum voltage, both electrical characteristics and safety deteriorate.

While discriminating circuit 5 detects the bicycle-mounted state, control circuit 2 of battery pack 100 shown in FIG. 1 turns off charge FET 3 so as to prevent battery 1 from being charged by the electromotive force of driving motor 21. When battery pack 100 is mounted on bicycle 20, charge FET 3 which is turned off prevents battery 1 from being charged by the electromotive force of driving motor 21, thus preventing battery pack 100 from being charged by the electromotive force from driving motor 21. Accordingly, in this state, the voltage of battery pack 100 does not increase, so that battery pack 100 can prevent battery 1 from deterioration due to the increase of the power supply voltage and prevent battery 1 from causing safety hazard. Discharge FET 4 is a switching element that supplies electric power from battery 1 to driving motor 21. Therefore, when this switching element is turned off, electric power cannot be supplied from battery 1 to driving motor 21 via the FET. It is an essential requirement of battery pack 100 that electric power is supplied from battery 1 to driving motor 21 while battery pack 100 is mounted on bicycle 20. Battery pack 100 as described above supplies electric power from battery 1 to driving motor 21 via parallel diode 7 while charge FET 3 is turned off. Parallel diode 7 is connected so as to pass electric current in a direction reverse to the forward direction of the FET to supply electric current from battery 1 to driving motor 21 with the FET which is turned off. Thus, battery pack 100 prevents battery 1 from being charged by the electromotive force of driving motor 21 with battery pack 100 being mounted on bicycle 20 while supplying electric power from battery 1 to driving motor 21, so as to prevent deterioration of battery 1 and ensure sufficient safety.

Control circuit 2 may turn off charge FET 3 whenever battery pack 100 is mounted on bicycle 20. However, control circuit 2 may turn on and off charge FET 3 according to the voltage of the battery to supply a large current from battery 1 to driving motor 21 and reduce electric power loss while preventing deterioration of battery 1 and safety degradation caused by abnormal voltage increase of battery 1. In battery pack 100, memory 6 of control circuit 2 stores a threshold voltage lower than the full charge voltage. The threshold voltage is determined taking into consideration the timing of the time lag of control circuit 2 switching charge FET 3 to turn off charge FET 3.

Control circuit 2 compares the voltage of battery 1 with the threshold voltage lower than the full charge voltage, and switches charge FET 3 to turn off charge FET 3 when the voltage of battery 1 exceeds the threshold voltage. Therefore, in principle, the voltage of the battery does not exceed the threshold voltage. However, control circuit 2 detects the voltage of the battery, determines whether or not the detected voltage is higher than the threshold voltage, and then switches charge FET 3 to turn off charge FET 3 upon determining that the detected voltage is higher than the threshold voltage. For this reason, a time lag occurs before charge FET 3 is switched to be turned off after the voltage of battery 1 has exceeded the threshold voltage. In particular, the time lag occurs before an analog signal of the detected battery voltage is converted by an A/D converter into a digital signal, then the converted digital signal is processed to determine whether or not the battery voltage exceeds the threshold voltage, and charge FET 3 is switched to be turned off. Moreover, battery pack 100 calculates the battery voltage by averaging plural digital signals converted by the A/D converter at predetermined sampling periods in order to reduce errors due to noise or the like to detect the battery voltage accurately. Therefore, a time lag occurs in detecting the battery voltage. The threshold voltage is determined to be lower than the full charge voltage of battery 1 by a value ranging from 0.1 V to 0.3 V so that battery 1 is not charged by driving motor 21 and the battery voltage does not exceed the threshold voltage during the time lag before charge FET 3 is switched to be turned off after the battery voltage has been detected.

Control circuit 2 that stores the threshold voltage in memory 6 does not turn off charge FET 3 whenever battery pack 100 is mounted on bicycle 20. While discriminating circuit 5 detects the bicycle-mounted state, control circuit 2 turns off charge FET 3 when the battery voltage is higher than the threshold voltage, but turns on charge FET 3 when the battery voltage is lower than the threshold voltage. Charge FET 3 which is turned on supplies electric power from battery 1 to driving motor 21 via the FET which is turned on without passing through parallel diode 7. The voltage drop due to parallel diode 7 is large, but the on-resistance of the FET which is turned on is significantly smaller, on the order of milliohms. Accordingly, even when a large current is supplied from battery 1 to driving motor 21, electric power loss caused by charge FET 3 is significantly small. Therefore, even when a large current is supplied from battery pack 100 to driving motor 21, electric power loss due to charge FET 3 is small so that electric power can be supplied efficiently from battery 1 to driving motor 21. Moreover, the amount of heat generated due to the Joule heat due to charge FET 3 is reduced so that the temperature increase of charge FET 3 can be reduced.

Charge FET 3 is switched to be turned on only when the battery voltage is lower than the threshold voltage predetermined to be a voltage lower than the full charge voltage. Therefore, even when charge FET 3 is turned on so that the electromotive force of driving motor 21 charges battery 1 and the battery voltage increases, the battery voltage does not rise to the full charge voltage during the time lag before control circuit 2 detects the increase of the battery voltage and switches charge FET 3 to turn off charge FET 3. This configuration prevents the battery deterioration due to the increased battery voltage exceeding the full charge voltage and also prevents the adverse effect of reduced safety.

Control circuit 2 as describe above switches charge FET 3 to turn on charge FET 3 while the battery voltage is lower than the threshold voltage. However, control circuit 2 may switch charge FET 3 to turn on charge FET only when the load current supplied from battery 1 to driving motor 21 exceeds a threshold current. Control circuit 2 stores a threshold current of the load current in memory 6. While discriminating circuit 5 detects the bicycle-mounted state, control circuit 2 turns off charge FET 3 when the load current is smaller than the threshold current, but turns on charge FET 3 when the load current is larger than the threshold current. Battery pack 100 does not turn on charge FET 3 when the load current supplied from battery 1 to bicycle 20 is smaller than the threshold current, but turns on FET 3 only when a load current larger than the threshold current is supplied from battery 1 to bicycle 20. Therefore, battery pack 100 reduces electric power loss due to charge FET 3 and efficiently supply electric power from battery 1 to driving motor 21 while reliably preventing the voltage of battery 1 from exceeding the full charge voltage. When the load current exceeds the threshold current, battery pack 100 is discharged by supplying electric power from battery 1 to driving motor 21, and battery 1 is not charged by regenerative braking. Therefore, even when charge FET 3 is switched to be turned on under this condition, battery 1 is prevented from being charged by the electromotive force of driving motor 21 and the battery voltage is prevented from exceeding the full charge voltage, thus ensuring safety of battery 1.By turning on charge FET 3 when the load current is larger than the threshold current, electric power loss due to charge FET 3 is reduced when a large current is supplied from battery 1 to driving motor 21, and also, a large current is prevented from passing through the parallel diode to protect charge FET 3.

While battery pack 100 is dismounted from bicycle 20 and connected to charger 30, discriminating circuit 5 detects the charger-connected state. When the voltage of the battery charged by charger 30 is lower than the full charge voltage, charge FET 3 is turned on to charge battery 1. When detecting that the voltage of battery 1 being charged is higher than the full charge voltage, charge FET 3 is switched to be turned off to stop charging battery 1.

Battery pack 100 as described above is mounted on bicycle 20 and is used as a power supply for supplying electric power to driving motor 21 incorporated in bicycle 20. Electric bicycle 200 shown in FIG. 1 includes battery pack 100 and control converter 25 connected between battery pack 100 and driving motor 21. Control converter 25 controls electric power supplied from battery pack 100 to driving motor 21.

Driving motor 21 drives a wheel (not shown) with the electric power supplied from battery pack 100. Driving motor 21 is connected to battery pack 100 via control converter 25. The electric power supplied from battery pack 100 is controlled by control converter 25 to adjust the rotation torque of the wheel. Control converter 25 adjusts the electric power supplied to driving motor 21 based on the speed of the bicycle and the pedal rotation torque produced by the user as parameters. Control converter 25 controls the electric power supplied to driving motor 21 so that, for example, a ratio of a pedal rotation torque and the torque at which driving motor 21 rotates the wheel is a predetermined ratio.

Since bicycle 20 that performs regenerative braking with driving motor 21 performs braking by charging battery pack 100 by the electric power generated by driving motor 21, a charging current flows through battery pack 100 during regenerative braking. Because the charging current may cause the adverse effect on battery 1 of battery pack 100, battery pack 100 includes a circuit configured to limit the charging current produced by regenerative braking of the bicycle.

### INDUSTRIAL APPLICABILITY

The present invention is suitably used for a battery pack that supplies electric power to a driving motor of an electric bicycle, particularly for an electric bicycle equipped with a mechanism of charging the battery pack by performing regenerative braking during braking.

### REFERENCE MARKS IN THE DRAWINGS

- 100: battery pack
- 200: electric bicycle
- 1: battery
- 2: control circuit
- 3: charge FET
- 4: discharge FET
- 5: discriminating circuit
- 6: memory
- 7: parallel diode
- 12: connecting terminal
- 13: pull-up resistor
- 14: power supply
- 20: bicycle
- 21: driving motor
- 22: connecting terminal
- 23: resistor
- 24: ground line
- 25: control converter
- 30: charger

## Claims

1. A battery pack (100) for an electric bicycle (200), the battery pack (100) comprising:
a battery (1) which is rechargeable;
a charge FET (3) including a parallel diode (7) connected in series with the battery (1); and
a control circuit (2) configured to turning on and off of controlling the charge FET (3), wherein
the control circuit (2) includes:
a discriminating circuit (5) configured to detect a bicycle-mounted state and a charger-connected state; and
a memory (6) configured to store a full charge voltage of the battery (1) and a threshold voltage lower than the full charge voltage, and
the control circuit (2) is configured, while the discriminating circuit (5) detects the bicycle-mounted state, to:
turn off the charge FET (3) while a voltage of the battery (1) is higher than the threshold voltage; and
turn on the charge FET (3) while the voltage of the battery (1) is lower than the threshold voltage, and
the control circuit (2) is configured, while the discriminating circuit (5) detects the charger-connected state, to stop charging the battery (1) by switching the charge FET (3) to turn off the charge FET (3) upon detecting that the voltage of the battery (1) charged by a charger (30) becomes higher than the full charge voltage.

2. A battery pack (100) for an electric bicycle (200), the battery pack (100) comprising:
a battery (1) which is rechargeable;
a charge FET (3) including a parallel diode (7) connected in series with the battery (1); and
a control circuit (2) configured to control turning on and off of the charge FET (3), wherein
the control circuit (2) includes:
a discriminating circuit (5) configured to detect a bicycle-mounted state and a charger-connected state; and
a memory (6) configured to store a full charge voltage of the battery (1) and a threshold current of a load current; and
the control circuit (2) is configured, while the discriminating circuit (5) detects the bicycle-mounted state, to:
turn off the charge FET (3) when the load current is smaller than the threshold current; and
turn on the charge FET (3) when the load current is larger than the threshold current, and
the control circuit (2) is configured, while the discriminating circuit (5) detects the charger-connected state, to stop charging the battery (1) by switching the charge FET (3) to turn off the charge FET (3) upon detecting that the voltage of the battery (1) charged by a charger (30) is higher than the full charge voltage.

3. The battery pack according to any one of claims 1 to 2, wherein
the control circuit (2) includes an A/D converter configured to convert the voltage of the battery (1) into a digital signal, and
the control circuit (2) is configured to calculate the voltage of the battery (1) by processing the digital signal converted by the A/D converter.

4. The battery pack according to any one of claims 1 to 3, wherein the charge FET (3) is a MOSFET including a parasitic diode as the parallel diode (7).

5. The battery pack according to claim 1, wherein the battery (1) is a lithium-ion battery.

6. An electric bicycle (200) comprising:
the battery pack (100) according to any one of claims 1 to 5; and
a driving motor (21) connected to the battery pack (100) via a control converter, the driving motor (21) configured to supply a charging current to the battery pack (100) during regenerative braking of the bicycle (200).

7. An electric bicycle (200) comprising:
the battery pack (100) according to any one of claims 1 to 5;
a driving motor (21) connected to the battery pack (100) via a control converter; and
a regenerative braking power generating mechanism configured to charge the battery pack (100) with an electromotive force of the driving motor (21).

## Patentansprüche

1. Batteriepack (100) für ein Elektrofahrrad (200), wobei der Batteriepack (100) umfasst:
eine Batterie (1), die wiederaufladbar ist;
einen Lade-FET (3), der eine Paralleldiode (7) umfasst, die in Reihe mit der Batterie (1) geschaltet ist; und
eine Steuerschaltung (2), die zum Ein- und Ausschalten des Lade-FET (3) konfiguriert ist, wobei
die Steuerschaltung (2) umfasst:
eine Unterscheidungsschaltung (5), die konfiguriert ist, um einen auf dem Fahrrad montierten Zustand und einen mit einem Ladegerät verbundenen Zustand zu erkennen; und
einen Speicher (6), der konfiguriert ist, um eine Volladespannung der Batterie (1) und eine Schwellenspannung, die niedriger als die Volladespannung ist, zu speichern, und
die Steuerschaltung (2) konfiguriert ist, während die Unterscheidungsschaltung (5) den auf dem Fahrrad montierten Zustand erkennt, um:
den Lade-FET (3) auszuschalten, während eine Spannung der Batterie (1) höher als die Schwellenspannung ist; und
den Lade-FET (3) einzuschalten, während die Spannung der Batterie (1) niedriger als die Schwellenspannung ist, und
die Steuerschaltung (2) konfiguriert ist, während die Unterscheidungsschaltung (5) den mit einem Ladegerät verbundenen Zustand erkennt, um das Laden der Batterie (1) zu stoppen, indem der Lade-FET (3) geschaltet wird, um den Lade-FET (3) auszuschalten, wenn erkannt wird, dass die Spannung der von einem Ladegerät (30) geladenen Batterie (1) höher als die Volladespannung wird.

2. Batteriepack (100) für ein Elektrofahrrad (200), wobei der Batteriepack (100) umfasst:
eine Batterie (1), die wiederaufladbar ist;
einen Lade-FET (3), der eine Paralleldiode (7) umfasst, die in Reihe mit der Batterie (1) geschaltet ist; und
eine Steuerschaltung (2), die zum Ein- und Ausschalten des Lade-FET (3) konfiguriert ist, wobei
die Steuerschaltung (2) umfasst:
eine Unterscheidungsschaltung (5), die konfiguriert ist, um einen auf dem Fahrrad montierten Zustand und einen mit einem Ladegerät verbundenen Zustand zu erkennen; und
einen Speicher (6), der konfiguriert ist, um eine Volladespannung der Batterie (1) und einen Schwellenstrom eines Laststroms zu speichern; und
die Steuerschaltung (2) konfiguriert ist, während die Unterscheidungsschaltung (5) den auf dem Fahrrad montierten Zustand erkennt, um:
den Lade-FET (3) auszuschalten, wenn der Laststrom kleiner als der Schwellenstrom ist; und
den Lade-FET (3) einzuschalten, wenn der Laststrom größer als der Schwellenstrom ist, und
die Steuerschaltung (2) konfiguriert ist, während die Unterscheidungsschaltung (5) den mit einem Ladegerät verbundenen Zustand erkennt, um das Laden der Batterie (1) zu stoppen, indem der Lade-FET (3) geschaltet wird, um den Lade-FET (3) auszuschalten, wenn erkannt wird, dass die Spannung der von einem Ladegerät (30) geladenen Batterie (1) höher als die Volladespannung ist.

3. Batteriepack nach einem der Ansprüche 1 bis 2, wobei
die Steuerschaltung (2) einen A/D-Wandler umfasst, der konfiguriert ist, um die Spannung der Batterie (1) in ein digitales Signal umzuwandeln, und
die Steuerschaltung (2) konfiguriert ist, um die Spannung der Batterie (1) durch Verarbeitung des vom A/D-Wandler umgewandelten digitalen Signals zu berechnen.

4. Batteriepack nach einem der Ansprüche 1 bis 3, wobei der Lade-FET (3) ein MOSFET ist, der eine parasitäre Diode als Paralleldiode (7) umfasst.

5. Batteriepack nach Anspruch 1, wobei die Batterie (1) eine Lithium-Ionen-Batterie ist.

6. Elektrofahrrad (200) umfassend:
den Batteriepack (100) nach einem der Ansprüche 1 bis 5; und
einen Antriebsmotor (21), der über einen Steuerungswandler mit dem Batteriepack (100) verbunden ist, wobei der Antriebsmotor (21) konfiguriert ist, um dem Batteriepack (100) während des regenerativen Bremsens des Fahrrads (200) einen Ladestrom zuzuführen.

7. Elektrofahrrad (200) umfassend:
den Batteriepack (100) nach einem der Ansprüche 1 bis 5;
einen Antriebsmotor (21), der über einen Steuerungswandler mit dem Batteriepack (100) verbunden ist; und
einen Mechanismus zur Erzeugung von Bremsenergie durch Rekuperation, der konfiguriert ist, um den Batteriepack (100) mit einer elektromotorischen Kraft des Antriebsmotors (21) zu laden.

## Revendications

1. Bloc-batterie (100) pour un vélo électrique (200), le bloc-batterie (100) comprenant :
une batterie (1) qui est rechargeable ;
un FET de charge (3) comprenant une diode parallèle (7) connectée en série avec la batterie (1) ; et
un circuit de commande (2) configuré pour commander la mise en marche et l'arrêt du FET de charge (3),
dans lequel
le circuit de commande (2) comprend :
un circuit de discrimination (5) configuré pour détecter un état monté sur vélo et un état connecté à un chargeur ; et
une mémoire (6) configurée pour stocker une tension de pleine charge de la batterie (1) et une tension de seuil inférieure à la tension de pleine charge, et
le circuit de commande (2) est configuré, tandis que le circuit de discrimination (5) détecte l'état monté sur vélo, pour :
couper le FET de charge (3) tandis qu'une tension de la batterie (1) est supérieure à la tension de seuil ; et
mettre en marche le FET de charge (3) tandis que la tension de la batterie (1) est inférieure à la tension de seuil, et
le circuit de commande (2) est configuré, tandis que le circuit de discrimination (5) détecte l'état connecté à un chargeur, pour arrêter le chargement de la batterie (1) en commutant le FET de charge (3) pour couper le FET de charge (3) en détectant que la tension de la batterie (1) chargée par un chargeur (30) devient supérieure à la tension de pleine charge.

2. Bloc-batterie (100) pour un vélo électrique (200), le bloc-batterie (100) comprenant :
une batterie (1) qui est rechargeable ;
un FET de charge (3) comprenant une diode parallèle (7) connectée en série avec la batterie (1) ; et
un circuit de commande (2) configuré pour commander la mise en marche et l'arrêt du FET de charge (3),
dans lequel
le circuit de commande (2) comprend :
un circuit de discrimination (5) configuré pour détecter un état monté sur vélo et un état connecté à un chargeur ; et
une mémoire (6) configurée pour stocker une tension de pleine charge de la batterie (1) et un courant de seuil d'un courant de charge ; et
le circuit de commande (2) est configuré, tandis que le circuit de discrimination (5) détecte l'état monté sur vélo, pour :
couper le FET de charge (3) lorsque le courant de charge est inférieur au courant de seuil ; et
mettre en marche le FET de charge (3) lorsque le courant de charge est supérieur au courant de seuil, et
le circuit de commande (2) est configuré, tandis que le circuit de discrimination (5) détecte l'état connecté à un chargeur, pour arrêter le chargement de la batterie (1) en commutant le FET de charge (3) pour couper le FET de charge (3) en détectant que la tension de la batterie (1) chargée par un chargeur (30) est supérieure à la tension de pleine charge.

3. Bloc-batterie selon l'une quelconque des revendications 1 à 2, dans lequel
le circuit de commande (2) comprend un convertisseur A/N configuré pour convertir la tension de la batterie (1) en un signal numérique, et
le circuit de commande (2) est configuré pour calculer la tension de la batterie (1) en traitant le signal numérique converti par le convertisseur A/N.

4. Bloc-batterie selon l'une quelconque des revendications 1 à 3, dans lequel le FET de charge (3) est un MOSFET comprenant une diode parasite en tant que diode parallèle (7).

5. Bloc-batterie selon la revendication 1, dans lequel la batterie (1) est une batterie lithium-ion.

6. Vélo électrique (200) comprenant :
le bloc-batterie (100) selon l'une quelconque des revendications 1 à 5 ; et
un moteur d'entraînement (21) connecté au bloc-batterie (100) par l'intermédiaire d'un convertisseur de commande, le moteur d'entraînement (21) configuré pour fournir un courant de charge au bloc-batterie (100) pendant le freinage par récupération du vélo (200).

7. Vélo électrique (200) comprenant :
le bloc-batterie (100) selon l'une quelconque des revendications 1 à 5 ;
un moteur d'entraînement (21) connecté au bloc-batterie (100) par l'intermédiaire d'un convertisseur de commande ; et
un mécanisme de génération de puissance de freinage par récupération configuré pour charger le bloc-batterie (100) avec une force électromotrice du moteur d'entraînement (21).
